Europäisches Patentamt

European Patent Office

Office européen des brevets

(19)

(11) Veröffentlichungsnummer: **0 266 628**
**A2**

# (12) EUROPÄISCHE PATENTANMELDUNG

(21) Anmeldenummer: 87115373.0

(22) Anmeldetag: 21.10.87

(51) Int. Cl.⁴ **G01N 1/24**

(30) Priorität: 06.11.86 DE 3637869

(43) Veröffentlichungstag der Anmeldung:
**11.05.88 Patentblatt 88/19**

(84) Benannte Vertragsstaaten:
**DE FR GB NL**

(71) Anmelder: **Drägerwerk Aktiengesellschaft**
**Moislinger Allee 53-55**
**D-2400 Lübeck 1(DE)**

(72) Erfinder: **May, Wolfgang, Dr. Dipl.-Chem.**
**Buchenweg 6**
**D-2067 Reinfeld(DE)**

(54) **Mehrfachhalterung für Prüfröhrchen.**

(57) Eine Mehrfachhalterung für Prüfröhrchen, durch die mehrere Einzelröhrchen zur gleichzeitigen Durchströmung einer Gasprobe an zumindest einem öffenbaren Ende von einem Anschlußstück, das einen Strömungsauslaß besitzt, aufgenommen sind, wobei die dazu vorgesehenen Aufnahmevorrichtungen zur Erreichung einer gleichmäßigen Durchströmung zumindest teilweise mit einem Drosselelement versehen sind, sollen so verbessert werden, daß in sie verschlossene Prüfröhrchen eingebracht werden können, die alle gleichzeitig für eine Gasprobenanalyse vorbereitet werden, ohne den übrigen Gasförderstrom unterbrechen zu müssen. Sie sollen erst in eingebautem Zustand geöffnet werden können. Dazu ist vorgesehen, daß das Anschlußstück (8) an seiner den Prüfröhrchen zugewandten Verbindungsseite (12) Durchbruchstücke (13) aufweist, mit denen die mit einem Membranverschluß versehenen Enden der Prüfröhrchen, gehalten in einem Steg, zur Herstellung einer Strömungsverbindung durchdringbar sind.

Figur 2

EP 0 266 628 A2

## Mehrfachhalterung für Prüfröhrchen

Die Erfindung betrifft eine Mehrfachhalterung für Prüfröhrchen, durch die mehrere Einzelröhrchen zur gleichzeitigen Durchströmung einer Gasprobe an zumindest einem öffenbaren Ende von einem Anschlußstück, das einen Strömungsauslaß besitzt, aufgenommen sind, wobei die dazu vorgesehenen Aufnahmevorrichtungen zur Erreichung einer gleichmäßigen Durchströmung zumindest teilweise mit einem Drosselelement versehen sind.

Eine derartige Mehrfachhalterung ist aus der US-PS 4 040 783 bekanntgeworden.

Bei der bekannten Halterung werden mehrere Prüfröhrchen in einem Gehäuse an ihren jeweiligen Enden durch ein Halteelement aufgenommen, welches als Kunststoffscheibe ausgebildet und mit Durchlaßöffnungen für die Prüfröhrchen versehen ist.

Jede Öffnung endet mit einer Aufnahmevorrichtung für das Prüfröhrchen, welche in Form konischer Ausnehmungen um die Durchlaßöffnungen herum ausgebildet sind. Das Gehäuse besitzt einen Boden mit einer Einlaßöffnung für eine Gasprobe und einen Deckel mit einer entsprechenden Auslaßöffnung. Durch geeignete Fördermittel, wie z. B. eine Pumpe, wird eine Gasprobe unterschiedlicher Zusammensetzung durch die zwischen Boden und Deckel aufgenommenen Prüfröhrchen gefördert. Die bekannte Mehrfachhalterung wird beispielsweise zum Nachweis der unterschiedlichen Komponenten eines Abgas-Luft-Gemisches eingesetzt. Da die Zusammensetzung der zu untersuchenden Gasprobe aus unterschiedlichen nachzuweisenden Schadstoffen bestehen kann, müssen Prüfröhrchen mit verschiedenen Nachweisreagenzien in den Halterungen aufgenommen sein. Da die verschiedenen Prüfröhrchen wegen ihrer unterschiedlichen Reagenzien und der damit erforderlichen unterschiedlichen Füllungen auch verschiedene Strömungswiderstände aufweisen können, ist bei der bekannten Mehrfachhalterung vorgesehen, daß die Durchlaßöffnungen zumindest teilweise mit einem als Kapillarstrecke ausgebildeten Drosselelement versehen sind. Dadurch soll während der Förderung der Gasprobe eine gleichmäßige, innerhalb tolerierbarer Schwankungsbreiten liegende Durchströmung der Prüfröhrchen unabhängig von deren Aufbau ermöglicht werden.

Bei der Verwendung der bekannten Mehrfachhalterung ist es von Nachteil, daß zu ihrer Bestückung mit Prüfröhrchen diese zuvor an ihren beiden Enden aufgebrochen bzw. geöffnet sein müssen. Sollen nämlich beispielsweise bei weiterlaufender Förderpumpe entweder die verbrauchten Prüfröhrchen entnommen oder neue Prüfröhrchen eingesetzt werden, so wird das zuletzt entnommene Prüfröhrchen bzw. das zuerst neu eingesetzte Prüfröhrchen am längsten dem Prüfgasstrom ausgesetzt, während die übrigen in voneinander unterschiedlichen Nachweiszeiten dem Prüfgas ausgesetzt sind. Dies kann man bei der bekannten Mehrfachhalterung nur dadurch vermeiden, daß die Förderpumpe zum Auswechseln der Prüfröhrchen abgestellt wird. Jedoch sind auch dann stets schon geöffnete Prüfröhrchen in die Halterung neu einzusetzen, so daß während der Handhabung der geöffneten Prüfröhrchen Fremd- oder Schadstoffe in ihre Füllung eindringen und somit ein Meßergebnis bei der nachfolgenden Analyse der Gasprobe verfälschen können.

Die vorliegende Erfindung geht somit von der Aufgabenstellung aus, eine Mehrfachhalterung der genannten Art derart zu verbessern, daß in sie verschlossene Prüfröhrchen eingebracht werden können, die alle gleichzeitig für eine Gasprobenanalyse vorbereitet werden, ohne den übrigen Gasförderstrom unterbrechen zu müssen. Sie sollen erst in eingebautem Zustand geöffnet werden können.

Zur Lösung der Aufgabe ist vorgesehen, daß das Anschlußstück an seiner den Prüfröhrchen zugewandten Verbindungsseite Durchbruchstücke aufweist, mit denen die mit einem Membranverschluß versehenen Enden der Prüfröhrchen, in einem Steg gehalten, zur Herstellung einer Strömungsverbindung durchdringbar sind.

Die mit der Erfindung erzielten Vorteile liegen darin, daß die notwendige Anzahl und Art der verschlossenen Prüfröhrchen zunächst in dem Steg aufgenommen werden können, wobei nach Ansetzen des Anschlußstückes alle vorgesehenen Prüfröhrchen gleichzeitig an ihrem Membranverschluß durchdrungen werden und somit gleichzeitig dem Prüfgasstrom ausgesetzt sind. Dabei kann eine am Strömungsauslaß des Anschlußstücks angebrachte Förderpumpe angeschlossen bleiben, da erst nach dem gleichzeitigen Durchdringen aller in der Mehrfachhalterung befindlichen Prüfröhrchen deren Durchströmung erfolgt. Die Strömungsgeschwindigkeit der zu untersuchenden Gasprobe durch die jeweiligen Prüfröhrchen wird dabei durch die entsprechenden Drosselelemente festgelegt.

Zweckmäßigerweise können die Durchbruchstücke als Strömungsanschlüsse ausgebildet sein, welche die Drosselelemente in sich enthalten. Somit wird nach dem Durchdringen der Membranverschlüsse anschließend von selbst die Strömungsverbindung zwischen dem Prüfröhrchen und der angeschlossenen Förderpumpe hergestellt.

In einer besonders zweckmäßigen Ausführung können die Durchbruchstücke mit einem tüllenförmigen Kragen versehen sein, welche die Enden der geöffneten Prüfröhrchen dicht umschließen.

In weiterer vorteilhafter Ausgestaltung der Erfindung können die Prüfröhrchen selbst an ihrem strömungsabwärtigen Ende das Drosselelement enthalten. Auf diese Weise können in die Halterung solche Prüfröhrchen eingesetzt werden, die schon von vornherein auf eine zur quantitativen Messung des nachzuweisenden Schadstoffs notwendige Strömungsgeschwindigkeit kalibriert sind.

Um auch beim Entnehmen gebrauchter Prüfröhrchen aus der Halterung ein nachträgliches Hineindiffundieren von Schadstoffen oder auch Hinausdiffundieren von Reaktionsprodukten aus dem geöffneten Prüfröhrchen zu verhindern, ist es vorteilhaft, den Membranverschluß als selbstschließende Lippendichtung auszubilden.

Eine erfindungsgemäße Mehrfachhalterung ist auch für solche Prüfröhrchen einsetzbar, deren öffenbares Ende mit einem Ventilverschluß versehen ist. Dieser Ventilverschluß kann beispielsweise ein federbelastetes Kugel-oder Tellerventil sein, welches ebenfalls leicht durch die Durchbruchstücke öffenbar ist und das sich bei Abnahme der Halterung wieder selbsttätig schließt.

Ein Ausführungsbeispiel der Erfindung wird anhand der schematischen Zeichnung dargestellt und im folgenden näher erläutert.

Es zeigen

Figur 1 eine Darstellung einer Prüfröhrchenreihe, in Stegen gehalten

Figur 2 die Darstellung eines Anschlußstückes für das Prüfröhrchenbündel.

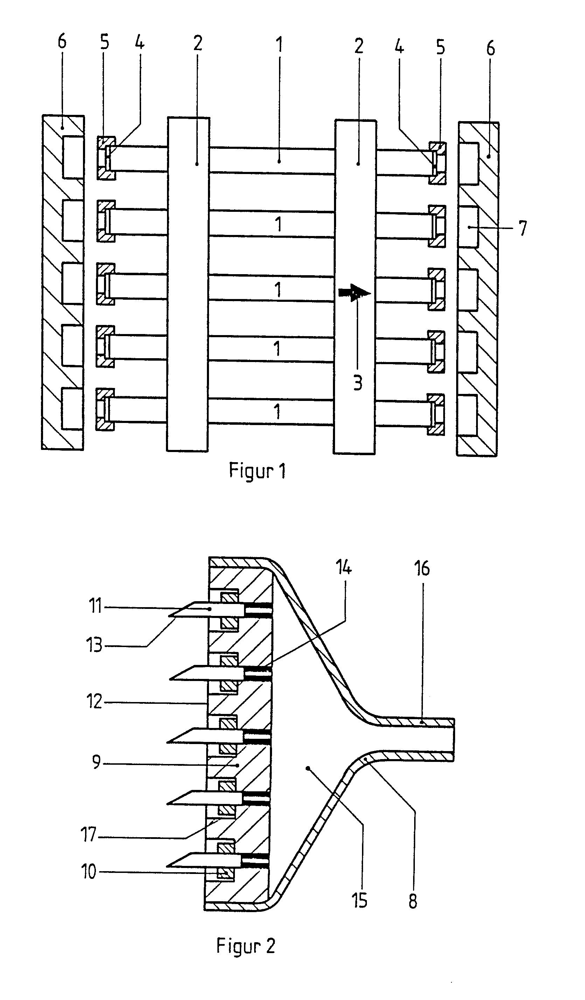

In Figur 1 sind mehrere Prüfröhrchen (1), dargestellt sind fünf Einzelröhrchen, an ihren beiden Enden von jeweils einem Steg (2) gehalten, parallel zueinander aufgereiht. Auf einem der Stege (2) ist ein Richtungspfeil (3) aufgedruckt, welcher die erforderliche Durchströmungsrichtung der Prüfröhrchen (1) angibt und somit auch die Anschlußseite für eine nicht dargestellte Förderpumpe für das Prüfgas vorgibt. Jedes Prüfröhrchen (1) ist an seinen beiden Enden mit einem Membranverschluß (4) versehen, welcher über die Öffnung des Prüfröhrchens (1) mittels eines gummielastischen Klemmringes (5) gespannt ist. Zum Zwecke der Lagerung des verschlossenen Prüfröhrchenbündels und zum Schutz der Membranverschlüsse (4) ist ein Verschlußstopfen (6) vorgesehen, der aus gummiartigem Material bestehen kann und Ausnehmungen (7) aufweist, in welche beim Aufsetzen der Verschlußstopfen (6) auf die Enden der Prüfröhrchen (1) die Klemmringe (5) eingedrückt werden können.

In Figur 2 ist ein Anschlußstück (8) dargestellt, welches trichterförmig ausgebildet und in dessen Trichteröffnung ein Aufnahmeblock (9) eingelassen ist. Der Aufnahmeblock (9) enthält nach Anzahl und Lage der in den Stegen (2) aufgenommenen Prüfröhrchen entsprechende Preßstücke (10). Sowohl der Aufnahmeblock als auch die Preßstücke (10) sind von durchgängigen Röhrchen (11) durchbrochen, die aus der den Prüfröhrchen (1) zuzuwendenden Stirnfläche (12) des Aufnahmeblocks (9) teilweise hinausragen und an diesem Ende eine als Durchbruchstück (13) ausgebildete Spitze besitzen. Die Röhrchen (11) enthalten in ihrem Innenraum Drosselelemente (14) in Form von Kapillarstrecken. Der trichterförmige Raum (15) des Anschlußstücks (8) mündet in einen Strömungsauslaß (16), an den eine nicht dargestellte Förderpumpe anschließbar ist.

Zum Einsatz der Mehrfachhalterung für die Analyse einer Gasprobe unterschiedlicher Zusammensetzung mittels der verschiedenen Prüfröhrchen (1) werden die beiden bei der Lagerung aufgesetzten Verschlußstopfen (6) entfernt und das dazugehörige Anschlußstück (8) beidseitig auf die Prüfröhrchenenden aufgesetzt. Dabei durchdringen die Durchbruchstücke (13) die Membranverschlüsse (4) und bewirken somit eine gleichzeitige Öffnung sämtlicher Prüfröhrchenenden. Da die Preßstücke (10) an der den Prüfröhrchen (1) zugewandten Stirnfläche (12) des Aufnahmeblocks (9) angeordnet sind und in diesem in einer entsprechenden Aussparung (17) derart eingelassen sind, daß diese die entsprechenden Klemmringe (5) an den Enden der Prüfröhrchen (1) aufnehmen können, erfolgt auch eine dichtende Verbindung zwischen Anschlußstück (8) und durchbrochenen Prüfröhrchen (1). Die Preßstücke (10) können dabei aus elastisch nachgiebigem Material bestehen, so daß unterschiedliche, toleranzbedingte Maßabweichungen der zueinandergehörenden Paßstücke ausgeglichen werden können. Um die Prüfröhrchen (1) in Richtung des Richtungspfeils (3) durchströmen zu können, wird beispielsweise eine nicht dargestellte Saugpumpe an den Strömungsauslaß (16) angeschlossen. Dabei können die Prüfröhrchen (1) beidseitig mit demselben Anschlußstück (8) verbunden sein. Wahlweise kann jedoch auch eine beliebige andere Form des Anschlußstücks (8) als die in Figur 2 dargestellte benutzt werden, wobei lediglich darauf geachtet werden muß, daß die eine Seite der Mehrfachhalterung eine Anschlußmöglichkeit für eine Gasfördereinrichtung besitzt.

Die Ausbildungsmöglichkeit der Mehrfachhalterung beschränkt sich nicht auf die dargestellte Parallelanordnung von Einzelprüfröhrchen (1), sondern kann in beliebig anderer geometrischer Anordnung erfolgen, wie z. B. kreisförmig oder als Bündel ausgebildet.

## Ansprüche

1. Mehrfachhalterung für Prüfröhrchen, durch die mehrere Einzelröhrchen zur gleichzeitigen Durchströmung einer Gasprobe an zumindest einem öffenbaren Ende von einem Anschlußstück, das einen Strömungsauslaß besitzt, aufgenommen sind, wobei die dazu vorgesehenen Aufnahmevorrichtungen zur Erreichung einer gleichmäßigen Durchströmung zumindest teilweise mit einem Drosselelement versehen sind, dadurch gekennzeichnet, daß das Anschlußstück (8) an seiner den Prüfröhrchen zugewandten Verbindungsseite (12) Durchbruchstücke (13) aufweist, mit denen die mit einem Membranverschluß (4) versehenen Enden der Prüfröhrchen (1), gehalten in einem Steg (2), zur Herstellung einer Strömungsverbindung durchdringbar sind.

2. Mehrfachhalterung nach Anspruch 1, dadurch gekennzeichnet, daß die Durchbruchstücke als Strömungsanschlüsse (11, 13), welche das Drosselelement (14) enthalten, für die durchbrochenen Enden der Prüfröhrchen (1) ausgebildet sind.

3. Mehrfachhalterung nach Anspruch 2, dadurch gekennzeichnet, daß die Durchbruchstücke (13) einen tüllenförmigen Kragen aufweisen, der die Enden der Prüfröhrchen (1) dicht umschließt.

4. Mehrfachhalterung nach Anspruch 1, dadurch gekennzeichnet, daß die Prüfröhrchen (1) an ihrem strömungsabwärtigen Ende das Drosselelement enthalten.

5. Mehrfachhalterung nach einem der Ansprüche 1 bis 4, dadurch gekennzeichnet, daß der Membranverschluß (4) als selbstschließende Lippendichtung ausgebildet ist.

6. Mehrfachhalterung für Prüfröhrchen, durch die mehrere Einzelröhrchen zur gleichzeitigen Durchströmung einer Gasprobe an zumindest einem öffenbaren Ende von einem Anschlußstück, das einen Strömungsauslaß besitzt, aufgenommen sind, wobei die dazu vorgesehenen Aufnahmevorrichtungen zur Erreichung einer gleichmäßigen Durchströmung zumindest teilweise mit einem Drosselelement versehen sind, dadurch gekennzeichnet, daß das Anschlußstück (8) an seiner den Prüfröhrchen zugewandten Verbindungsseite (12) Durchbruchstücke (13) aufweist, mit denen die mit einem Ventilverschluß (4) versehenen Enden der Prüfröhrchen (1), gehalten in einem Steg (2), zur Herstellung einer Strömungsverbindung durchdringbar sind.

Figur 1

Figur 2